# EUROPEAN PATENT APPLICATION

(11) **EP 4 765 585 A1**
(43) Date of publication of application: **24.06.2026**
(21) Application number: 25225707.6
(22) Date of filing: 19.12.2025
(51) Int. Cl.: H02K 1/20, H02K 9/197

(54) **ELECTRIC MOTOR**

(30) Priority: 19.12.2024 JP 2024224349
(71) Applicant: TOYOTA JIDOSHA KABUSHIKI KAISHA, Toyota-Shi, Aichi-Ken 471-8571 (JP)
(72) Inventor: USAMI, Kazuaki, TOYOTA-SHI, AICHI, 471-8571 (JP)
(74) Representative: Cabinet Beau de Loménie

(57) **Abstract**

An electric motor (1) may include: a hollow stator core (10); a plurality of coils (20a, 20b, 20c) disposed on the stator core (10) and arranged along a circumferential direction of the stator core (10); a rotor (30) extending in an axial direction of the stator core (10) within a hollow portion of the stator core (10); and a cooling system including a plurality of coolant flow paths (42a, 42b, 42c) arranged in a yoke portion (12) of the stator core (10). The plurality of coolant flow paths (42a, 42b, 42c) may be arranged in a distributed manner along the circumferential direction of the stator core (10). The cooling system may be configured to control a flow rate of a coolant flowing through each of the plurality of coolant flow paths (42a, 42b, 42c) based on a rotation angle of the rotor.

## Description

### CROSS REFERENCE TO RELATED APPLICATIONS

This application claims priority to Japanese Patent Application No. 2024-224349 filed on December 19, 2024. The entire content of the priority application is incorporated herein by reference and can be referred to by the skilled person when considering the present disclosure.

### TECHNICAL FIELD

The art disclosed herein relates to an electric motor.

### BACKGROUND ART

An electric motor includes a hollow stator core, a plurality of coils disposed on the stator core and arranged along a circumferential direction of the stator core, and a rotor extending in an axial direction of the stator core within a hollow portion of the stator core.

Japanese Patent Application Publication No. 2024-13100 describes an electric motor further including a blower fan configured to send airflow toward an end surface on one side of the stator core and a magnetic cooling system disposed between the stator core and the blower fan. The magnetic cooling system includes a permanent magnet, a magnetocaloric effect material, and a moving mechanism configured to move the magnetocaloric effect material between a position where a magnetic field is applied by the permanent magnet and a position where the magnetic field is not applied. The magnetocaloric effect material is a material which generates heat when magnetized and absorbs the heat when demagnetized. As such, its temperature changes in accordance with changes in a magnetic field. In the art of Japanese Patent Application Publication No. 2024-13100, the magnetocaloric effect material having moved to the position where the magnetic field is applied generates heat, and this heat is discharged. Due to this, the temperature of the magnetocaloric effect material having moved to the position where the magnetic field is not applied drops relative to an ambient temperature. The position where the magnetic field is not applied is located on an airflow passage of the blower fan. As a result of this, the airflow cooled by the magnetocaloric effect material is delivered to the stator core.

### SUMMARY

In the art of Japanese Patent Application Publication No. 2024-13100, a space for disposing the permanent magnet for generation of magnetic field is required. Further, in the art of Japanese Patent Application Publication No. 2024-13100, a space for disposing the moving mechanism for moving the magnetocaloric effect material between the position with magnetic field application and the position without magnetic field application. Due to this, there is a problem in Japanese Patent Application Publication No. 2024-13100 that the size of the electric motor tends to be large. The present teachings provide an electric motor configured to cool a stator core by magnetocaloric effect while suppressing an increase in the size of the electric motor.

An electric motor disclosed herein may comprise: a hollow stator core; a plurality of coils disposed on the stator core and arranged along a circumferential direction of the stator core; a rotor extending in an axial direction of the stator core within a hollow portion of the stator core; and a cooling system comprising a plurality of coolant flow paths arranged in a yoke portion of the stator core. The plurality of coolant flow paths may be arranged in a distributed manner along the circumferential direction of the stator core. The cooling system may be configured to control a flow rate of a coolant flowing through each of the plurality of coolant flow paths based on a rotation angle of the rotor.

According to this configuration, magnetic flux accompanying a rotating magnetic field passes through the yoke portion of the stator core. The magnetic flux passing through any position of the yoke portion varies according to the rotation angle of the rotating magnetic field, i.e., according to the rotation angle of the rotor. Due to this, at any arbitrary position of the yoke portion, there is a timing when the magnetic flux passes and a timing when the magnetic flux does not pass according to the rotation angle of the rotor. The yoke portion is constituted of the magnetic material, and thus has magnetocaloric effect. Accordingly, at any arbitrary position of the yoke portion, the yoke portion generates heat at the timing when the magnetic flux passes, and absorbs heat when the magnetic flux does not pass. In the above-described electric motor, the plurality of coolant flow paths, which is disposed in the yoke portion, is arranged in the distributed manner along the circumferential direction of the stator core. Due to this, when the rotor rotates, there is a timing when the magnetic flux passes in the site of the yoke portion where one or more coolant flow paths of the plurality of coolant flow paths exist and the magnetic flux does not pass in the site of the yoke portion where the remaining one or more coolant flow paths exist. The cooling system of the above-described electric motor can effectively cool the stator core while maintaining the coolant flow rate of the cooling system by making the flow rate of the coolant flow path(s) at the site of the yoke portion, which is generating heat due to the magnetic flux passing therethrough, to be greater than the flow rate of the coolant flow path at the site of the yoke portion which is absorbing heat due to the absence of magnetic flux passing therethrough. As such, the above-described electric motor can cool the stator core by utilizing the magnetocaloric effect of the yoke portion by controlling the flow rate of the coolant flowing in each of the plurality of coolant flow paths based on the rotation angle of the rotor. The above-described electric motor does not require permanent magnet or moving mechanism. The above-described electric motor can cool the stator core by utilizing the magnetocaloric effect while suppressing increase in the size of the electric motor.

### BRIEF DESCRIPTION OF DRAWINGS

FIG. 1 is a schematic explanatory diagram for describing a configuration of an electric motor of the present embodiment as seen along a rotary shaft direction.
FIG. 2 is a schematic explanatory diagram for describing a configuration of a cooling system of the present embodiment.
FIG. 3 is an explanatory diagram for describing rotating magnetic field generated in the electric motor of the present embodiment and magnetic flux accompanying the rotating magnetic field.
FIG. 4 is an explanatory diagram for describing rotating magnetic field generated in the electric motor of the present embodiment and magnetic flux accompanying the rotating magnetic field, with a different rotating angle of a rotor from that of FIG. 3.
FIG. 5 is a schematic explanatory diagram for describing a configuration of a valve plate of an electric motor according to a modification of the present embodiment.
FIG. 6 is a schematic explanatory diagram for describing the configuration of the valve plate of the electric motor according to the modification of the present embodiment, with a different position of the valve plate from that of FIG. 5.

### DETAILED DESCRIPTION

Hereafter, with reference to a three-phase synchronous electric motor, the art disclosed herein will be described. The art disclosed herein may be applied widely to other types of electric motors.

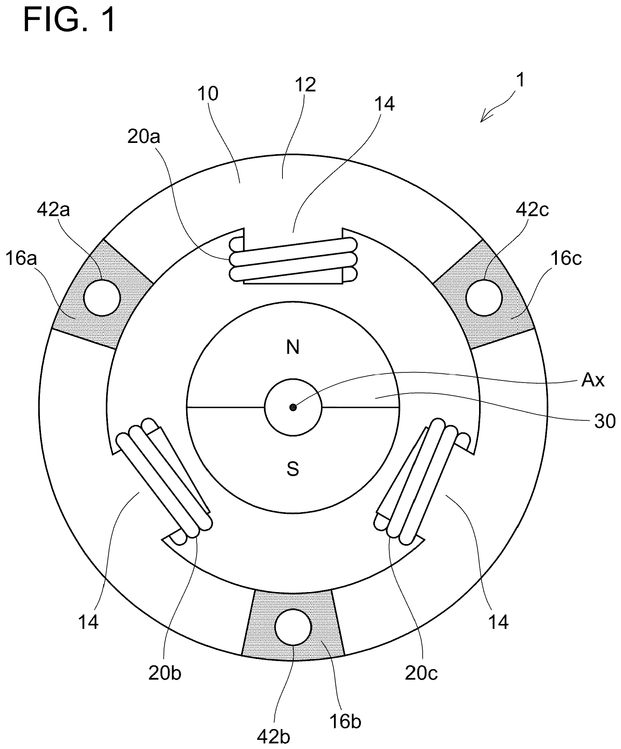

As illustrated in FIG. 1, an electric motor 1 comprises a stator core 10, a plurality of coils 20a, 20b, 20c, a rotor 30, and a plurality of coolant flow paths 42a, 42b, 42c.

The stator core 10 comprises a hollow cylindrical yoke portion 12 and a plurality of teeth 14 extending radially inward from an inner peripheral surface of the yoke portion 12. A central hole of the yoke portion 12 has the rotor 30 inserted therein. The rotor 30 is disposed in a central hole of the stator core 10 such that the central axis of the rotor 30 coincides a central axis AX (i.e., rotation axis) of the stator core 10. Hereafter, a direction parallel to the central axis AX will be referred to as an axial direction and a direction extending along a circle centered on the central axis AX will be referred to as a circumferential direction.

Each of the plurality of teeth 14 extends along the axial direction from an end surface of one side of the yoke portion 12 to an end surface of another side thereof, and is disposed along the circumferential direction at 120-degree intervals from each other. The yoke portion 12 excluding a plurality of magnetocaloric effect material portions 16a, 16b, 16c, which is to be described below, and the teeth 14 are configured by a plurality of electromagnetic steel plates being stacked on each other along the axial direction.

Each of the plurality of coils 20a, 20b, 20c is disposed corresponding to one of the plurality of teeth 14, and is wound about the corresponding teeth 14. Due to this, the plurality of coils 20a, 20b, 20c is also disposed at 120-degree intervals in the circumferential direction. The plurality of coils 20a, 20b, 20c has alternating current with 120 degrees shifted in phase from each other applied thereon. For example, alternating current corresponding to U-phase is applied on the first coil 20a, alternating current corresponding to V-phase is applied on the second coil 20b, and alternating current corresponding to W-phase is applied on the third coil 20c.

The yoke portion 12 has the plurality of magnetocaloric effect material portions 16a, 16b, 16c. The magnetocaloric effect material constituting the plurality of magnetocaloric effect material portions 16a, 16b, 16c is a material having a larger magnetic entropy change than a magnetic material of the yoke portion 12 that is other than the plurality of magnetocaloric effect material portions 16a, 16b, 16c, that is, the electromagnetic steel plates. The magnetocaloric effect material is not limited to a particular one, but may be an alloy including gadolinium or alloy including manganese.

The plurality of magnetocaloric effect material portions 16a, 16b, 16c is arranged in a distributed manner along the circumferential direction. In this example, the first magnetocaloric effect material portion 16a is disposed between the first coil 20a and the second coil 20b, the second magnetocaloric effect material portion 16b is arranged between the second coil 20b and the third coil 20c, and the third magnetocaloric effect material portion 16c is disposed between the third coil 20c and the first coil 20a.

Each of the plurality of magnetocaloric effect material portions 16a, 16b, 16c extends between the inner peripheral surface and an outer peripheral surface of the yoke portion 12 in a cross-section perpendicular to the axial direction, and divides the yoke portion 12 besides the magnetocaloric effect material along the circumferential direction. As an alternative to this example, each of the plurality of magnetocaloric effect material portions 16a, 16b, 16c may be disposed partially between the inner peripheral surface and the outer peripheral surface of the yoke portion 12. Also, each of the plurality of magnetocaloric effect material portions 16a, 16b, 16c extends from the end surface on one side to the end surface on the other side of the yoke portion 12 along the axial direction in a cross-section parallel to the axial direction. As an alternative to this example, each of the plurality of magnetocaloric effect material portions 16a, 16b, 16c may be disposed partially between the end surface on one side and the end surface on the other side of the yoke portion 12. As such, as long as each of the plurality of magnetocaloric effect material portions 16a, 16b, 16c is arranged in a distributed manner along the circumferential direction, each of the plurality of magnetocaloric effect material portions 16a, 16b, 16c may be disposed in various layouts.

The plurality of coolant flow paths 42a, 42b, 42c is arranged in the yoke portion 12, and is arranged in a distributed manner along the circumferential direction. Each of the plurality of coolant flow paths 42a, 42b, 42c corresponds to one of the plurality of magnetocaloric effect material portions 16a, 16b, 16c, and is arranged in contact with the corresponding magnetocaloric effect material portion. More specifically, each of the plurality of coolant flow paths 42a, 42b, 42c extends through the corresponding magnetocaloric effect material portion from the end surface on the one side to the end surface on the other side of the yoke portion 12 along the axial direction. In this example, the first coolant flow path 42a extends through the first magnetocaloric effect material portion 16a, the second coolant flow path 42b extends through the second magnetocaloric effect material portion 16b, and the third coolant flow path 42c extends through the third magnetocaloric effect material portion 16c.

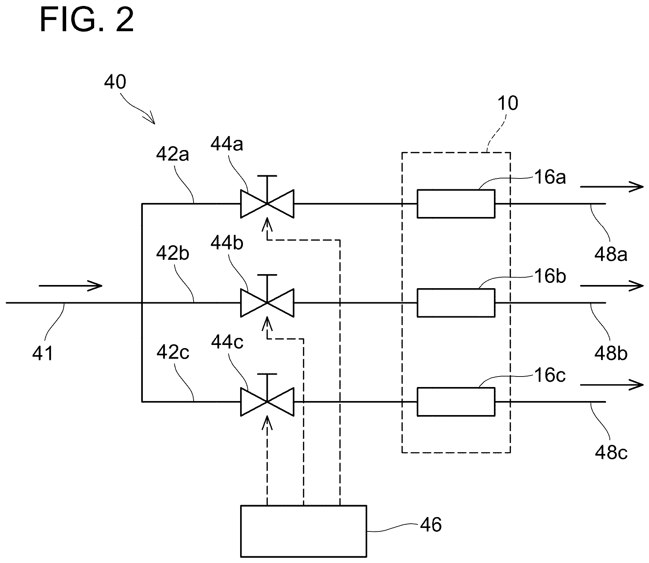

FIG. 2 schematically illustrates a configuration of a cooling system 40. The cooling system 40 comprises an input flow path 41, the plurality of coolant flow paths 42a, 42b, 42c, a plurality of solenoid valves 44a, 44b, 44c, and a valve controller 46. The plurality of coolant flow paths 42a, 42b, 42c is flow paths parallel connected to each other on a downstream of the input flow path 41. Each of the plurality of solenoid valves 44a, 44b, 44c is disposed corresponding to one of the plurality of coolant flow paths 42a, 42b, 42c. In this example, the first solenoid valve 44a is arranged in the first coolant flow path 42a, the second solenoid valve 44b is arranged in the second coolant flow path 42b, and the third solenoid valve 44c is arranged in the third coolant flow path 42c. As will be described below, the valve controller 46 controls valve opening degrees of the plurality of solenoid valves 44a, 44b, 44c based on a rotation angle of the rotor 30.

The input flow path 41 is supplied with lubricant oil as a coolant. The lubricant oil is suctioned by a pump, for example, from a reservoir disposed at a bottom of a casing housing the electric motor 1, and is cooled by a heat exchanger, for example, and is then supplied to the input flow path 41. The lubricant oil flowing through each of the plurality of coolant flow paths 42a, 42b, 42c exchanges heat with the corresponding magnetocaloric effect material portion, and then is discharged out of outlets 48a, 48b, 48c. The plurality of coolant flow paths 42a, 42b, 42c may have separate outlets, or may have a common outlet. The lubricant oil discharged out of the outlets 48a, 48b, 48c of the plurality of coolant flow paths 42a, 42b, 42c may be ejected toward, for example, a lubricating target site and/or cooling target site of the electric motor 1. An example of the cooling target side is not limited in particular, but may be end coil(s) of the plurality of coils 20a, 20b, 20c, for example.

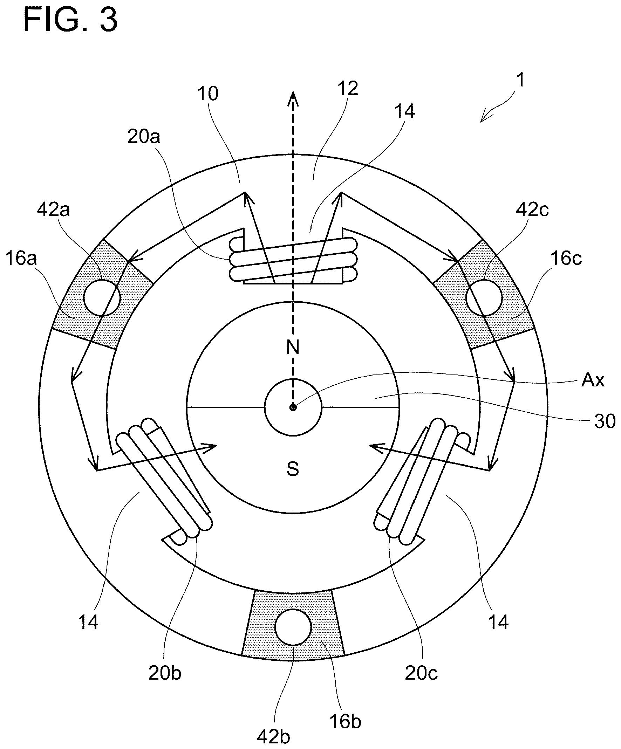

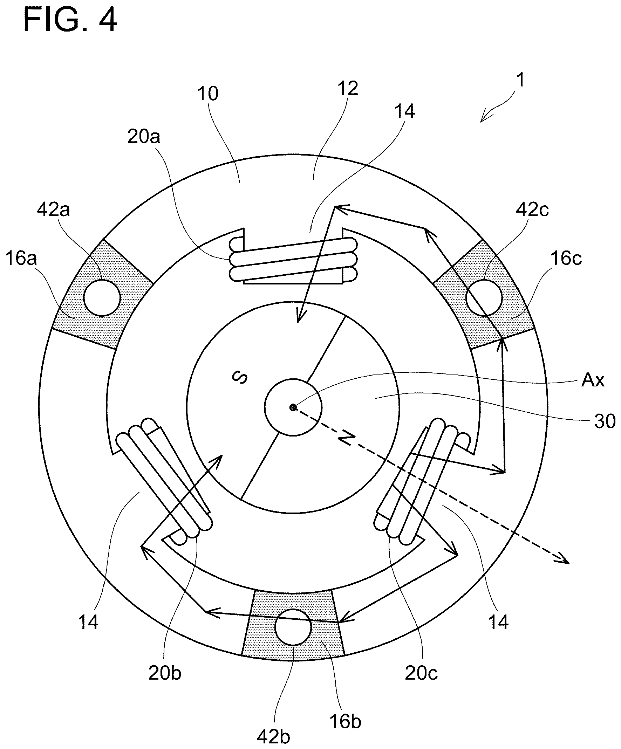

FIGS. 3 and 4 illustrates rotating magnetic field and magnetic flux passing through the stator core 10 accompanying that rotating magnetic field, with different rotation angles of the rotor 30. The rotating magnetic field is shown in dashed-line arrows, and the magnetic flux is shown in solid-line arrows.

The timing shown in FIG. 3 is a timing when the rotating magnetic field is oriented from the central axis AX to the first coil 20a. At this occasion, the magnetic flux accompanying the rotating magnetic field passes, among the yoke portion 12, through the first magnetocaloric effect material portion 16a and the third magnetocaloric effect material portion 16c, but does not pass through the second magnetocaloric effect material portion 16b. The timing shown in FIG. 4 is a timing when the rotating magnetic field is oriented from the central axis AX to the third coil 20c. At this occasion, the magnetic flux accompanying the rotating magnetic field passes through, among the yoke portion 12, the second magnetocaloric effect material portion 16b and the third magnetocaloric effect material portion 16c, but does not pass through the first magnetocaloric effect material portion 16a.

At the timing shown in FIG. 3, the valve controller 46 of the cooling system 40 controls to increase the valve opening degrees of the first solenoid valve 44a and the third solenoid valve 44c, and decrease the valve opening degree of the second solenoid valve 44b. Here, the opening degree of the second solenoid valve 44b may be controlled to be zero, that is, the second solenoid valve 44b may be controlled to be completely shut off. Due to this, the flow rate of the lubricant oil flowing through the first coolant flow path 42a and the third coolant flow path 42c becomes greater than the flow rate of the lubricant oil flowing through the second coolant flow path 42b. On the other hand, at the timing shown in FIG. 4, the valve controller 46 of the cooling system 40 controls to increase the valve opening degrees of the second solenoid valve 44b and the third solenoid valve 44c and decrease the valve opening degree of the first solenoid valve 44a. Here, the valve opening degree of the first solenoid valve 44a may be controlled to be zero, that is, the first solenoid valve 44a may be controlled to be completely shut off. Due to this, the flow rate of the lubricant oil flowing through the second coolant flow path 42b and the third coolant flow path 42c becomes greater than the flow rate of the lubricant oil flowing through the first coolant flow path 42a.

As such, the valve controller 46 of the cooling system 40 controls such that the flow rate of the coolant flow path(s) corresponding to the magnetocaloric effect material portion(s) through which the magnetic flux passes through is greater than the flow rate of the coolant flow path(s) corresponding to the magnetocaloric effect material portion(s) through which the magnetic flux does not pass. Here, the valve controller 46 may control the valve opening degrees of the plurality of solenoid valves 44a, 44b, 44c based on phases of current passing through the plurality of coils 20a, 20b, 20c, i.e., based on the phases of three-phase alternating current. More specifically, the valve controller 46 may control the valve opening degrees of the plurality of solenoid valves 44a, 44b, 44c based on control signal(s) of an inverter for generating three-phase alternating current.

The magnetocaloric effect material constituting the plurality of magnetocaloric effect material portions 16a, 16b, 16c generates heat due to decrease in magnetic entropy when subjected to magnetic field, and absorbs heat due to increase in magnetic entropy when not subjected to magnetic field. That is, the cooling system 40 controls the flow rate(s) of the coolant flow path(s) corresponding to the magnetocaloric effect material portion(s) under the state of generating heat to be greater than the flow rate(s) of the coolant flow path(s) corresponding to the magnetocaloric effect material portion(s) under the state of absorbing heat. Due to this, the flow rate(s) of the coolant flow path(s) with a greater heat exhaust efficiency are controlled to be greater than the flow rate(s) of coolant flow path(s) with a lower heat exhaust efficiency. As a result of this, the stator core 10 is effectively cooled while the flow rate of the lubricant oil flowing in the cooling system 40 is maintained.

The electric motor 1 is an example where the magnetocaloric effect of the plurality of magnetocaloric effect material portions 16a, 16b, 16c is actively utilized by arranging the plurality of magnetocaloric effect material portions 16a, 16b, 16c in the yoke portion 12. As an alternative to this example, the plurality of magnetocaloric effect material portions 16a, 16b, 16c may not be disposed in the yoke portion 12. In this case, the stator core 10 can be cooled with the same mechanism as above by utilizing the magnetocaloric effect of electromagnetic steel plates of the yoke portion 12.

The valve controller 46 may determine whether to execute the above-described control of the valve opening degrees of the plurality of solenoid valves 44a, 44b, 44c based on a rotation speed of the rotor 30. For example, the valve controller 46 may control to increase/decrease the opening degrees of the plurality of solenoid valves 44a, 44b, 44c based on the rotation angle of the rotor 30 when the rotation speed of the rotor 30 is equal to or lower than a predetermined value, and may control to maintain the valve opening degrees of the plurality of solenoid valves 44a, 44b, 44c to be constant irrespective of the rotation angle of the rotor 30 when the rotation speed of the rotor 30 is higher than the predetermined value.

When the rotation speed of the rotor 30 is higher than the predetermined value, even if the valve opening degrees are controlled to be increased/decreased, it will be difficult to increase/decrease the coolant flow rate so as to follow the rotation angle of the rotor 30. Due to this, when the rotation speed of the rotor 30 is higher than the predetermined value, the valve opening degrees of the plurality of solenoid valves 44a, 44b, 44c are controlled to be constant. In this case also, because the heat exhaust efficiency when the plurality of magnetocaloric effect material portions 16a, 16b, 16c generates heat is great, the stator core 10 can be cooled more effectively than the example where the plurality of magnetocaloric effect material portions 16a, 16b, 16c are not provided.

On the other hand, by executing the control of increasing/decreasing the valve opening degrees of the plurality of solenoid valves 44a, 44b, 44c when the rotation speed of the rotor 30 is equal to or lower than the predetermined value, the coolant flow rate can be increased/decreased at a greater degree along with the timings of heat generation and heat absorption of the plurality of magnetocaloric effect material portions 16a, 16b, 16c. Due to this, because the magnetocaloric effect of the plurality of magnetocaloric effect material portions 16a, 16b, 16c can be actively utilized, the stator core 10 can be cooled more effectively.

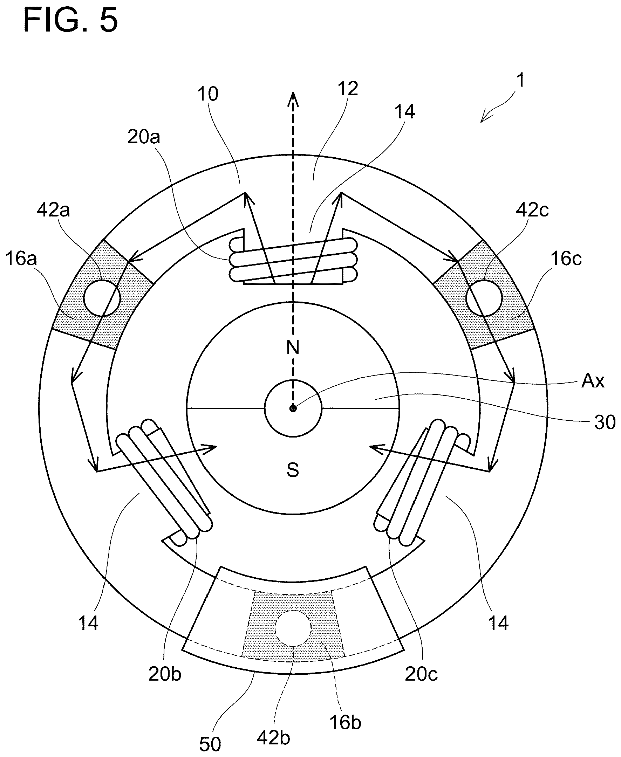

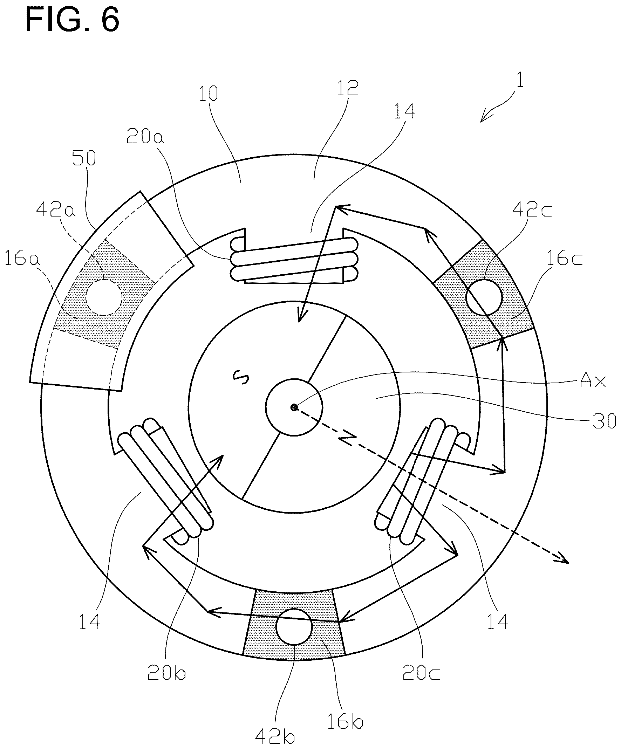

The above-described cooling system 40 is an example where the coolant flow rate is controlled by utilizing the plurality of solenoid valves 44a, 44b, 44c. As an alternative to this example, the cooling system 40 may control the coolant flow rate by utilizing a mechanical mechanism. FIGS. 5 and 6 illustrate an example where a valve plate 50 coupled to the rotor 30 is utilized to control the coolant flow rate. The valve plate 50 is secured to a flange (not illustrated) radially extending from the rotor 30, and is configured to rotate around the central axis AX of the stator core 10 in accordance with rotation of the rotor 30. The valve plate 50 has a predetermined shape, and by rotating around the central axis AX of the stator core 10, it is configured to close the coolant flow path corresponding to the magnetocaloric effect material portion that is in the state of absorbing heat and open the coolant flow path corresponding to the magnetocaloric effect material portion that is the state of generating heat. Although this is not limiting, the valve plate 50 may be arranged outside an end surface of the stator core 10 in the axial direction, for example, and may be configured to open/close the outlets 48a, 48b, 48c of the plurality of coolant flow paths 42a, 42b, 42c. Such mechanical mechanism does not need the plurality of solenoid valves 44a, 44b, 44c and the valve controller 46, and thus can be produced at a low cost.

The following summarizes the embodiments disclosed herein. The technical elements described below are independent of one another and may provide technical utility either individually or in various combinations.

(Aspect 1) An electric motor may comprise: a hollow stator core; a plurality of coils disposed on the stator core and arranged along a circumferential direction of the stator core; a rotor extending in an axial direction of the stator core within a hollow portion of the stator core; and a cooling system comprising a plurality of coolant flow paths arranged in a yoke portion of the stator core, wherein the plurality of coolant flow paths may be arranged in a distributed manner along the circumferential direction of the stator core, and the cooling system may be configured to control a flow rate of a coolant flowing through each of the plurality of coolant flow paths based on a rotation angle of the rotor.

(Aspect 2) The electric motor according to aspect 1, wherein the yoke portion of the stator core may comprise a plurality of magnetocaloric effect material portions arranged in a distributed manner along the circumferential direction of the stator core, the plurality of magnetocaloric effect material portions may be constituted of a material having a larger magnetic entropy change than a magnetic material of a remaining portion of the yoke portion, and each of the plurality of coolant flow paths may be arranged corresponding to one of the plurality of magnetocaloric effect material portions.

(Aspect 3) The electric motor according to aspect 2, wherein each of the plurality of coolant flow paths may extend through the yoke portion along the axial direction of the stator core and may be in contact with the corresponding one of the magnetocaloric effect material portions.

(Aspect 4) The electric motor according to any one of aspects 1 to 3, wherein the cooling system may comprise a plurality of solenoid valves, each of the plurality of solenoid valves may be arranged corresponding to one of the plurality of coolant flow paths, and the cooling system may be configured to control a valve opening degree of each of the plurality of solenoid valves based on the rotation angle of the rotor.

(Aspect 5) The electric motor according to aspect 4, wherein when a rotation speed of the rotor is equal to or lower than a predetermined value, the cooling system may be configured to control the valve opening degree of each of the plurality of solenoid valves based on the rotation angle of the rotor.

(Aspect 6) The electric motor according to any one of aspects 1 to 3, wherein the cooling system may comprise a valve plate coupled to the rotor, and the valve plate may be configured to close one or more of the plurality of cooling flow paths and open remaining one or more of the plurality of cooling flow paths by rotating around the axial direction of the stator core in accordance with rotation of the rotor.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. An electric motor (1) comprising:
a hollow stator core (10);
a plurality of coils (20a, 20b, 20c) disposed on the stator core (10) and arranged along a circumferential direction of the stator core (10);
a rotor (30) extending in an axial direction of the stator core (10) within a hollow portion of the stator core (10); and
a cooling system (40) comprising a plurality of coolant flow paths (42a, 42b, 42c) arranged in a yoke portion (12) of the stator core (10),
wherein the plurality of coolant flow paths (42a, 42b, 42c) is arranged in a distributed manner along the circumferential direction of the stator core (10), and
the cooling system (40) is configured to control a flow rate of a coolant flowing through each of the plurality of coolant flow paths (42a, 42b, 42c) based on a rotation angle of the rotor (30).

2. The electric motor according to claim 1, wherein
the yoke portion (12) of the stator core (10) comprises a plurality of magnetocaloric effect material portions (16a, 16b, 16c) arranged in a distributed manner along the circumferential direction of the stator core (10),
the plurality of magnetocaloric effect material portions (16a, 16b, 16c) is constituted of a material having a larger magnetic entropy change than a magnetic material of a remaining portion of the yoke portion (12), and
each of the plurality of coolant flow paths (42a, 42b, 42c) is arranged corresponding to one of the plurality of magnetocaloric effect material portions (16a, 16b, 16c).

3. The electric motor according to claim 2, wherein
each of the plurality of coolant flow paths (42a, 42b, 42c) extends through the yoke portion (12) along the axial direction of the stator core (10) and is in contact with the corresponding one of the magnetocaloric effect material portions (16a, 16b, 16c).

4. The electric motor according to any one of claims 1 to 3, wherein
the cooling system (40) comprises a plurality of solenoid valves (44a, 44b, 44c),
each of the plurality of solenoid valves (44a, 44b, 44c) is arranged corresponding to one of the plurality of coolant flow paths (42a, 42b, 42c), and
the cooling system (40) is configured to control a valve opening degree of each of the plurality of solenoid valves (44a, 44b, 44c) based on the rotation angle of the rotor (30).

5. The electric motor according to claim 4, wherein
when a rotation speed of the rotor (30) is equal to or lower than a predetermined value, the cooling system (40) is configured to control the valve opening degree of each of the plurality of solenoid valves (44a, 44b, 44c) based on the rotation angle of the rotor (30).

6. The electric motor according to any one of claims 1 to 3, wherein
the cooling system (40) comprises a valve plate (50) coupled to the rotor (30), and
the valve plate (50) is configured to close one or more of the plurality of cooling flow paths (42a, 42b, 42c) and open remaining one or more of the plurality of cooling flow paths (42a, 42b, 42c) by rotating around the axial direction of the stator core (10) in accordance with rotation of the rotor (30).
